# EUROPEAN PATENT SPECIFICATION

(11) **EP 0 371 642 B1**
(45) Date of publication and mention of the grant of the patent: **28.02.1996**
(21) Application number: 89311633.5
(22) Date of filing: 10.11.1989
(51) Int. Cl.: G06F 1/16, H05K 5/00

(54) **Portable electronic apparatus**
Tragbares Elektronikgerät
Appareil électronique portable

(30) Priority: 30.11.1988 JP 300808/88
(43) Date of publication of application: 06.06.1990
(73) Proprietor: International Business Machines Corporation, Armonk, N.Y. 10504 (US)
(72) Inventor: Davis, Myron F., Boca Raton Florida 33486 (US); Martin, Randall W., The Woodlands Texas 77381 (US); Nomura, Hideo, Yokohama-shi Kanagawa-ken (JP); Pollitt, Richard F, Highland Beach Florida 33483 (US); Wittner, Ernest, Boca Raton Florida 33487 (US); Yoshikawa, Wataru, Fujisawa-shi Kanagawa-ken (JP)
(74) Representative: Burt, Roger James, Dr.

(56) References cited:
- WO-A-86/06516
- GB-A- 2 200 783
- US-A- 4 718 740

## Description

The invention relates to portable electronic apparatus, in particular a personal computer, which is normally stored and used on a desk or similar support.

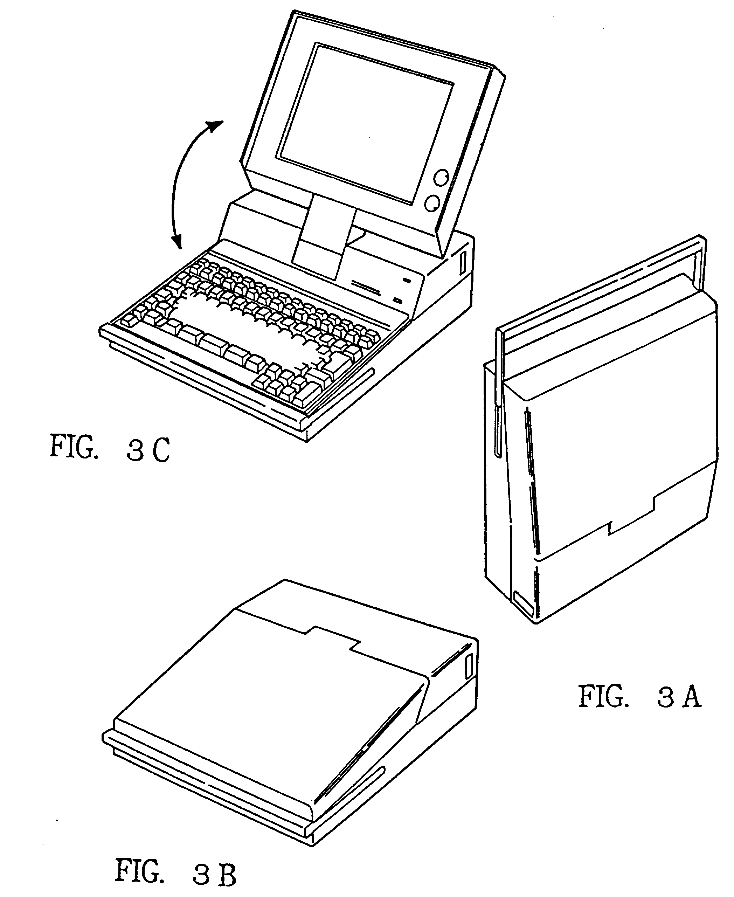

Various portable personal computers have been developed. Many of these are the "suit case" type as shown in Fig. 3A of the drawings herein. For carrying this type of personal computer, a handle is provided on the top of the personal computer. In the non-use, storage, condition, the personal computer is placed on a desk in the upright position, as shown in the Fig. 3A. When the personal computer is to be used or operated by an operator, the personal computer is laid down on the desk in a horizontal position, as shown in Fig. 3B, and its cover is opened, as shown in Fig. 3C. A flat type display device is mounted on a back of the cover. By opening the cover, a keyboard appears.

This type of personal computer has inherent disadvantages. When the personal computer is operated by the operator, it must be laid down, as shown in the Fig. 3B, so that the area contacting the desk is appreciably increased, and the space available on the desk for other purposes is decreased. The operator who frequently uses the personal computer tends to place the personal computer on the desk in the horizontal position, as shown in the Fig. 3B, since he/she finds it a burden to store the personal computer in the upright position, as in Fig. 3A, and then to lay the personal computer down into the horizontal position shown in the Figs. 3B and 3C whenever he/she wants to operate the personal computer.

Portable personal computers of the type shown in the Figs. 3A-3C are disclosed in US Design Patent No. 243,250 and in US-A-4,497,036. US-A-4,669,053 discloses a personal computer similar to the personal computer shown in the Figs. 3A-3C. As described in this patent specification, a disk drive unit is retractably mounted on the top surface of the personal computer, and a retractable keyboard is pivotally mounted on a front surface, and a display device is fixedly attached in a position substantially parallel to the front surface. The personal compute disclosed has a larger bottom surface than the front surface, whereby it requires a large space on the desk.

US-A-4,294,496 discloses a portable personal computer wherein a keyboard enclosure is hinged to a main frame enclosure in such a manner that it is possible to fold the keyboard up against the main frame and to latch the two together. A disk drive unit is mounted in such a manner that a surface or plane of a disk in the drive unit is parallel to left and right side surface. The personal computer disclosed requires a large space on the desk.

US-A-4,496,943 discloses a portable information display system which includes a compact enclosure of a size to fit under a typical airline seat. It includes a fixedly mounted cathode ray tube display and a retractable keyboard pivotally mounted on a front surface. It requires a large distance between the front surface and a back surface due to the cathode ray tube display.

US-A-4,660,111 discloses a lifting mechanism for a floppy disk drive, which differs from the mechanism of the electronic apparatus described herein.

US-A-4,718,740 describes portable electronic apparatus comprising: a container having a front surface, a back surface, a top surface, and a bottom surface, the area of said bottom surface being less than the area of said front surface, and said front surface comprising a pivotally mounted cover; a keyboard mounted on the inside of said pivotally mounted cover; a flat type display device contained in the container and movable between a retracted position and a pulled out position, the display screen of said flat type display device being parallel to said front surface of said container when in said retracted position, said flat type display device being movably mounted in said container by a moving mechanism having a first member pivotally mounted on a frame of said container at a first pivot point, and a second member pivotally mounted on said first member at second pivot point which is spaced from said first pivot point, and supporting said flat type display device.

In accordance with the present invention there is now provided portable electronic apparatus comprising a container having a front surface, a back surface, a top surface, and a bottom surface, the area of said bottom surface being less than the area of said front surface, and said front surface comprising a pivotably mounted cover, a keyboard mounted on the inside of said pivotably mounted cover; and a flat type display device contained in the container and movable between a retracted position and a pulled out position, the display screen of said flat type display device being parallel to said front surface of said container when in said retracted position, said flat type display device being movably mounted in said container by a moving mechanism comprising a first member pivotally mounted on a frame of said container at a first pivot point, and a second member pivotally mounted on said first member at second pivot point which is spaced from said first pivot point, and supporting said flat type display device; characterised in that said pulled out position comprises a pivoted out position and said moving mechanism comprises a frictional mechanism mounted on said first and second members so that said display device can be positioned at any selected angled position with respect to said front surface.

When the electronic apparatus is to be used, the cover is opened to make the keyboard available to an operator. The space occupied by the apparatus in use is only increased by the size of the keyboard.

In order that the invention may be more readily understood, an embodiment will now be described with reference to the accompanying drawings in which:
Fig 1 is a perspective view of a portable personal computer shown "open" with the keyboard being positioned in the operating position,
Fig 2 is a perspective view of a portable personal computer illustrated in Fig 1 shown "closed" with the keyboard being moved to its closed position,
Figs 3A, 3B and 3C are perspective views of a known type of personal computers,
Fig 4 is a perspective view of the portable personal computer illustrated in Fig 1 with the flat type display device and the floppy disk drive unit moved to their pulled out positions,
Figs 5A and 5B illustrate the mechanism for supporting and moving the flat type display device.

Fig. 11 illustrates the mechanism for latching the keyboard into the rest of the personal computer.

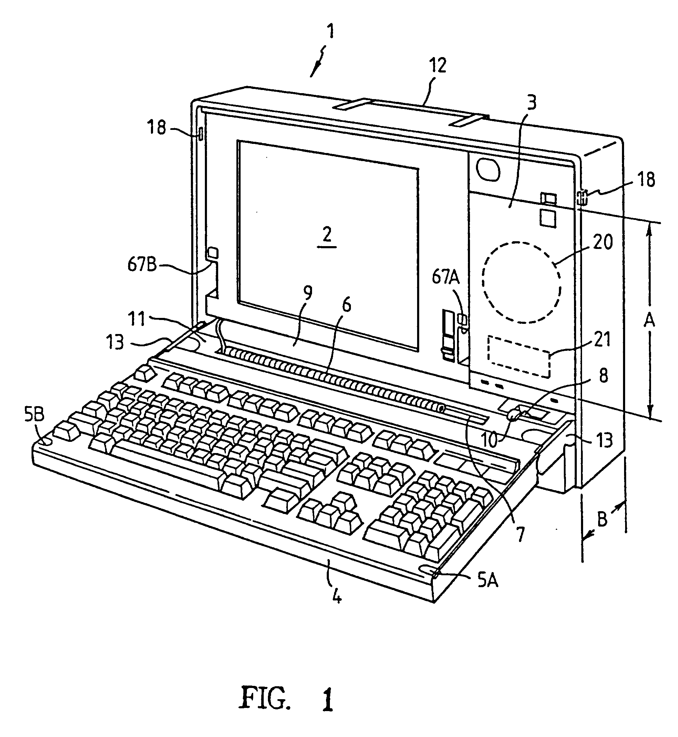

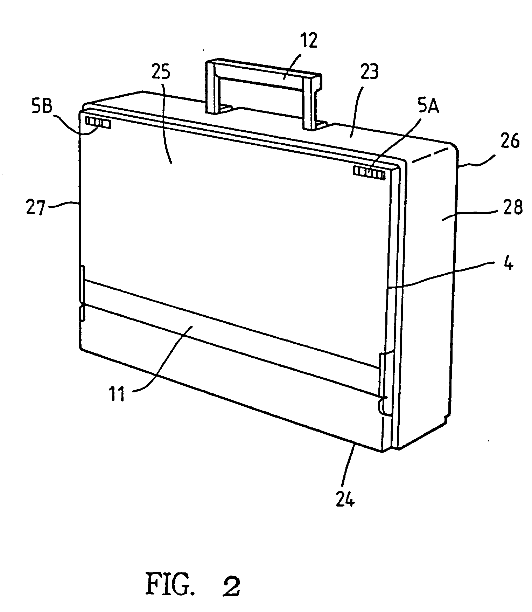

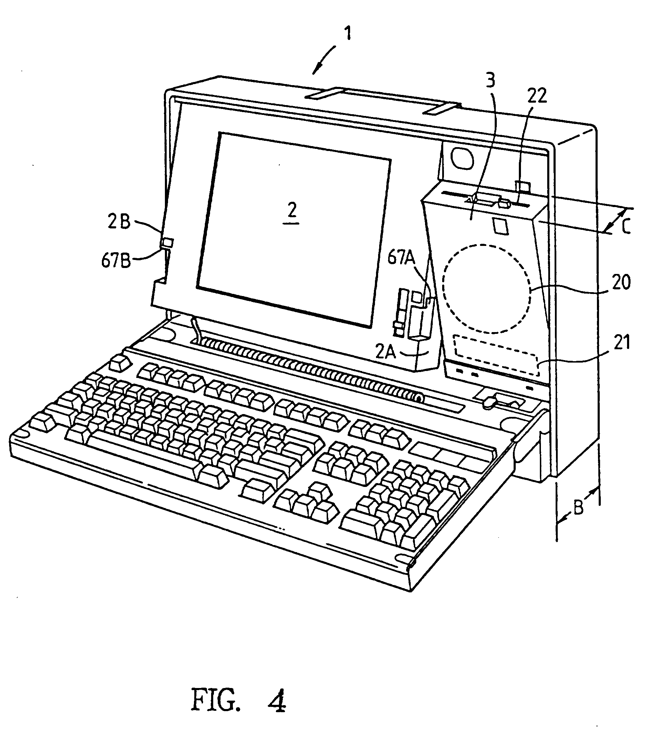

Referring to Fig. 1, a portable type personal computer 1 includes a flat type display device 2, a floppy disk drive unit 3, and a keyboard 4. The keyboard 4 is pivotally mounted on a frame of the personal computer 1, and pivotable between the opened position as shown in Fig. 1 and a closed position as shown in Fig. 2. That is, the keyboard 4 acts as a cover of the portable computer 1. Both the flat type display device 2 and the floppy disk drive unit 3 are also moved between the retracted positions as shown in Fig. 1 and the open positions as shown in Fig. 4. A mechanism for controlling the movement of the display device 2 and the floppy disk drive unit 3 is described hereinafter.

Referring to Fig. 2, the case of the portable personal computer 1 has a top surface 23, a bottom surface 24, a front surface 25, a back surface 26, a left side surface 27 and a right side surface 28. The area of the bottom surface 24 is smaller than the area of each of the front surface 25 and the back surface 26. The bottom surface 24 is placed on the desk during both the non-used state and used state of the personal computer.

Referring to Fig. 1, the keyboard 4 is mounted on the back inside of the cover. The cover constitutes a main part of the front surface.

A hard disk drive unit, a power supply circuit, a microprocessor, and various circuit boards are mounted within the personal computer 1. For simplifying the drawings and since they do not form essential parts of the invention, these are not shown in the Figs. 1, 2 and 4.

The flat type display device 2 is a plasma display device or a liquid crystal display device, or the like.

The keyboard 4 is retained in the retracted or closed position by latch mechanisms 5A and 5B. These mechanisms are described hereinafter with reference to Fig. 11. The keyboard 4 is electrically connected to the personal computer 1 by a cable 6, which is stored in a groove 7 of a member 11.

A power switch 8 is mounted on a surface 9 of the main part of the personal computer 1. The switch 8 is a "seesaw" type switch. When the left end of the switch (as viewed in Fig. 1) is in a high position, as shown in Fig. 1, the power is turned on. An extended tab 10 is provided on the member 11. When the keyboard 4 is closed as shown in Fig. 2, the tab 10 pushes down the raised left end of the switch 8 to turn off the switch 8 automatically.

A handle 16 is mounted on the top surface 23 of the personal computer 1.

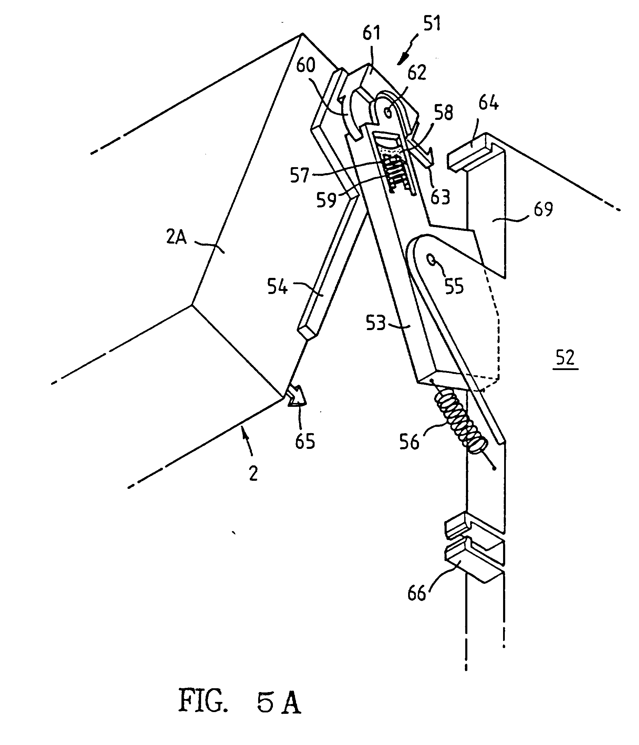

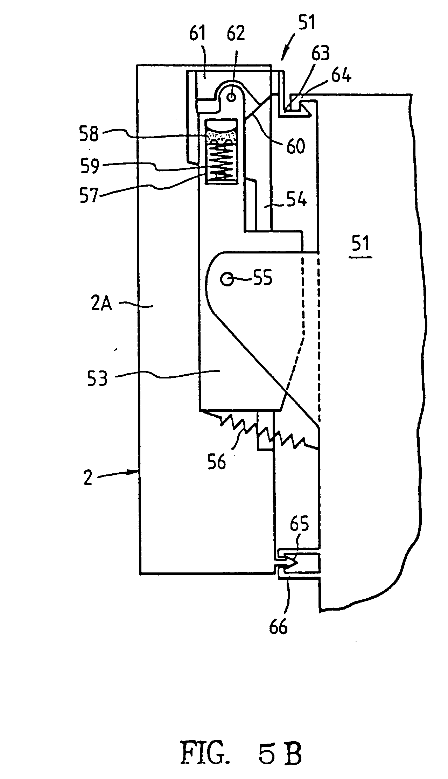

Referring to Figs. 5A and 5B, a mechanism 51 for controlling the movement of the flat type display device 2 between the retracted (closed) position and the pulled out (open) position is shown. The mechanism is mounted between a right side wall 2A of the flat type display device 2 and a frame 52 of the main part of the personal computer 1. The same mechanism with the components being in a mirror relationship to the components shown in Figs. 5A and 5B is mounted between a left side wall 2B of the display device 2 and a left side frame.

The mechanism 51 includes a first member 53 and a second member 54. The first member 53 is pivotally mounted on the frame 52 at a pivot point 55, and is biased in a counter-clockwise direction (as viewed in the Figures) by a coil spring 56. A slot 57 is formed in the upper portion of the first member 53. A sliding shoe 58 and a coil spring 59 are mounted within the slot 57. The sliding shoe 58 is pressed firmly against a cam surface 60 of a cam member 61 by the coil spring 59. The cam member 61 is rigidly mounted on the second member 54. By the firm engagement of the sliding shoe 58 and the cam surface 60, the display device 2 can be moved into and maintained at any angled position relative to the rest of the computer. The second member 54 is pivotally mounted on the first member 53 at a pivot point 62. A first latch comprising an arrow head shaped member 63 and a receiving member 64 and second latch comprising an arrow head shaped member 65 and a receiving member 66 are provided to latch the flat type display device 2 to the frame 52 as illustrated in Fig. 5B.

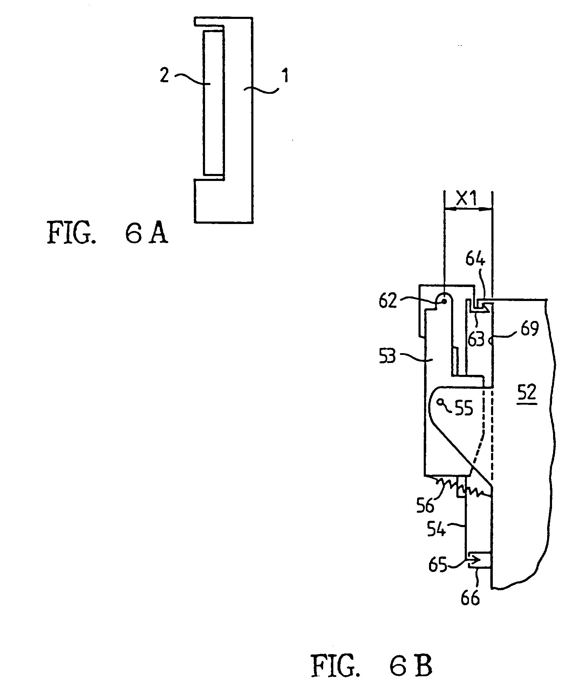

Referring to Figs. 6B, 7B, 8B and 9B, these show the movement of the mechanism 51 and the flat type display device 2 with respect to the frame 52.

In Fig. 6B, the arrow head shaped members 63 and 65 engage with the receiving members 64 and 66, respectively, so that the flat type display device 2 is retained in the retracted position at which the keyboard 4 is closed as shown in Figs. 2 and 6A.

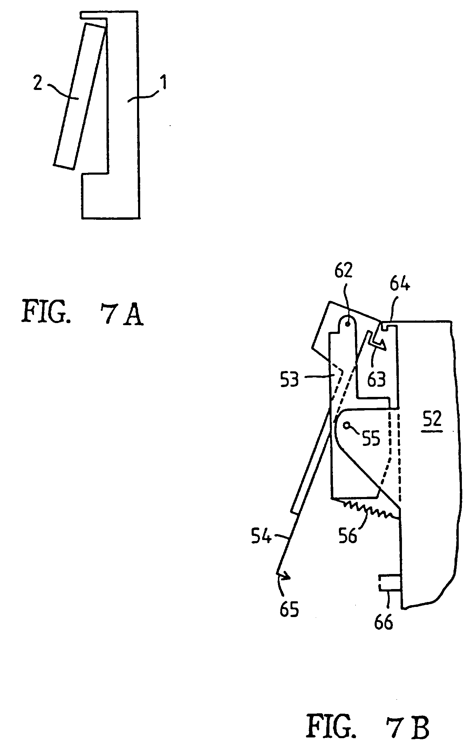

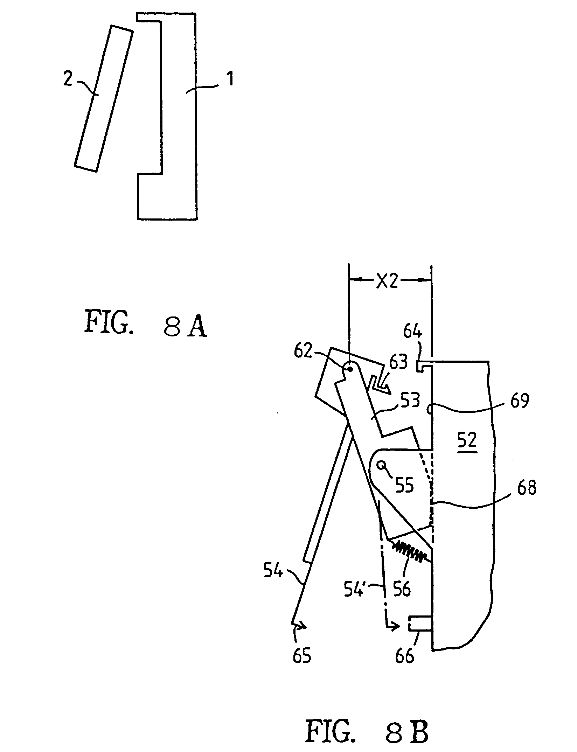

To disengage the first and second latches, an operator pulls the display device 2 out of the personal computer 1. For this purpose, recessed portions 67A and 67B, as shown in Figs. 1 and 4, are formed on the right and left side of the display device 2, respectively. The operator pulls the recessed portions 67A or 67B by his/her finger. As the second member 54, which is rigidly coupled to the portions 67A and 67B, is being pulled by the operator, the arrow head shaped member 65 becomes disengaged from the receiving member 66, and the second member 54 is rotated in the clockwise direction. The arrow head shaped member 63 becomes disengaged from the receiving member 64, so that the first member 53 starts to rotate in the counter-clockwise direction by the action of the coil spring 56, as shown in Fig. 7B. As the operator continues to pull the recessed portion 67A, the second member 54 maintains the position shown in the Fig. 7B. The second member 53 rotates until a back surface 68 is stopped by the frame 52, as shown in Fig. 8B.

It is apparent that, when the flat type display device 2 is retained in the retracted position, as shown in Figs. 1, 5B, 6A and 6B, the distance between the pivot point 62 and the frame surface 69 is a minimum X₁, as shown in Fig. 6B, and when the display device 2 is pulled out, the distance between the pivot point 62 and the frame surface 69 is a maximum X₂, as shown in Fig. 8B. As the flat type display device 2 is moved from its retracted position to its pulled out position, it is pivoted at the pivot point 62 between a positive angle position, such as a position shown by the second member 54 in Fig. 8B and a negative angle position, such as a position shown by the dashed line 54′ corresponding to the position of the second member in Fig. 8B. The flat type display device 2 can be retained at any angled position between these two by the relatively firm engagement between the cam surface 60 and the sliding shoe 58.

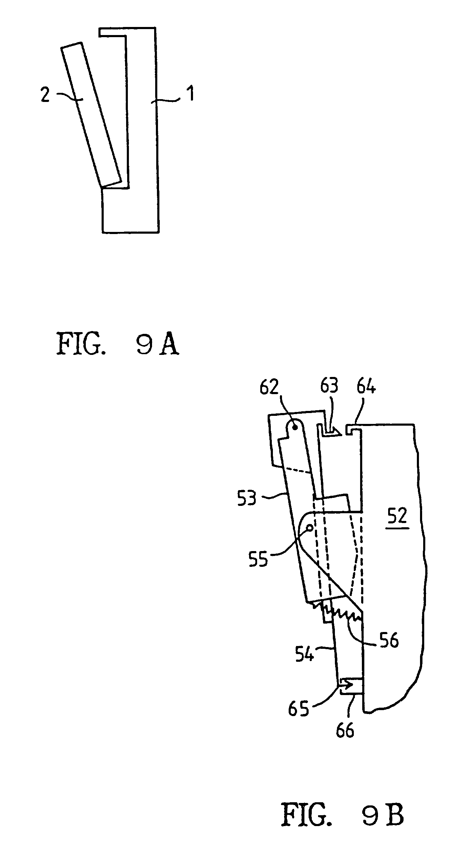

To return the flat type display device 2 to its retracted position, the operator pushes the lower part of the display device 2 to incline the display device 2 to the negative angle position (Fig. 8B) and then pushes the top part of the display device as shown in Fig. 9B, so that first the arrow head shaped member 65 is latched by the receiving member 66 and then the arrow head shaped member 63 is latched by the receiving member 64, whereby the mechanism is returned to the original position as shown in Figs. 5B and 6B.

Describing the floppy disk drive unit 3 with reference to Figs. 1 and 4, the floppy disk drive unit 3 includes a floppy disk load/unload slot 22 and a floppy disk drive device 21. A floppy disk 20 can be loaded and unloaded through the slot 22. The drive device 21, which includes a read/write head and a step motor, etc., and is shown by the block 21, is well known. The longitudinal dimension A, shown in Fig. 1, is larger than the depth B of the personal computer 1, and the depth C of the floppy disk drive unit 3, shown in Fig. 4, is smaller than the depth B. The floppy disk drive unit 3 is pivotally mounted at its bottom portion, and can be pivotally moved between its closed or retracted position shown in Fig. 1 and its open or pulled out position shown in Fig. 4. Since the pivot mechanism is well known, it is not shown in the drawings.

The read/write operations of the floppy disk 20 are performed with the drive unit 3 in either the open position or the closed position since the floppy disk drive device 21 is mounted within the unit 3. By arranging the surface of the floppy disk 20 parallel to a surface of the flat type display device 2, the depth B of the personal computer 1 is reduced to a minimum value, which is sufficient to provide the stability of the personal computer 1 when it is standing on the desk. In the closed or retracted position, the slot 22 is hidden within the personal computer 1, whereby the slot 22 is protected against dust or other undesired outside particles.

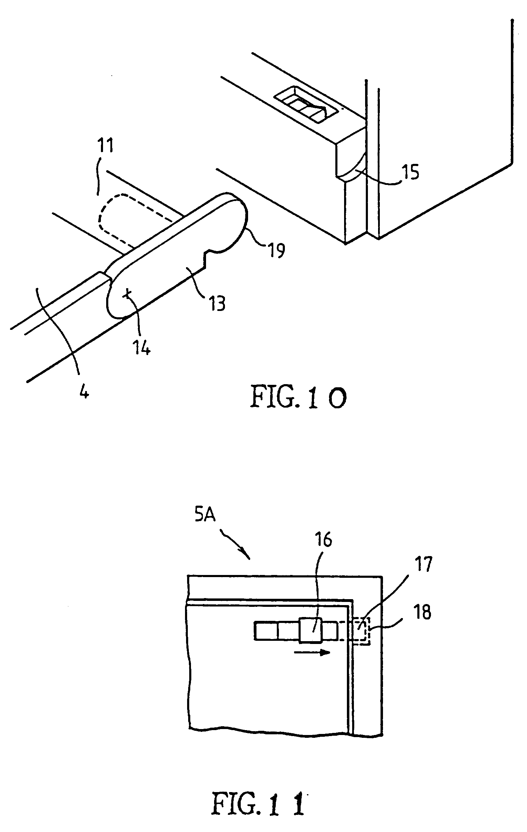

With reference to Figs. 1 and 10, the mechanism for pivoting the keyboard 4 to allow for its movement between its closed position as shown in Fig. 2 and its open position as shown in Figs. 1 and 4 is described. Leg members 13 are pivotally mounted at pivot points 14 on both the right and left sides of the keyboard 4. Fig. 10 shows the right side components. The leg members support the member 11. A surface 19 of the leg member 13 is supported by a receiving surface 15. The round surfaces 15 and 19 allow the keyboard 4 to pivot between its closed position and its opened position. The same mechanism as that shown in the Fig. 10 is provided on the left side of the keyboard with the components being in a mirror relationship with those illustrated in Fig. 10. The leg member 13 is detachably mounted on the receiving surface 15, whereby the keyboard 4 can be detached from the personal computer 1, as shown in the Fig. 10. The leg member 13 can be pivoted in the clockwise direction from the position shown in the Fig. 10, whereby the detached keyboard 4 can be inclined to face to the operator and supported by the leg member 19.

With reference to Figs. 1, 2 and 11, these illustrate the latch mechanisms 5A and 5B to retain the keyboard 4 in the closed position. Fig. 11 shows the right side latch mechanism 5A. The left side latch mechanism 5B is provided with the same structure as that of the mechanism 5A, with the components being in a mirror relationship. The latch mechanism 5A includes a slide button 16, a bar 17 coupled to the slide button 16, and an aperture 18. The aperture is formed on the right side wall of the personal computer, as shown in the Fig. 1.

Rightward movement of the slide button 16 by the operator causes the bar 17 to enter into the aperture 18, whereby the keyboard 4 is locked in the closed position. Leftward movement of the slide button 16 by the operator causes the bar 17 to retract from the aperture 18, thereby the back of the latch mechanism 5A is released.

## Claims

1. Portable electronic apparatus comprising
a container (1) having a front surface (25), a back surface (26), a top surface (23), and a bottom surface (24), the area of said bottom surface (24) being less than the area of said front surface (25), and said front surface (25) comprising a pivotably mounted cover, a keyboard (4) mounted on the inside of said pivotally mounted cover; and
a flat type display device (2) contained in the container (1) and movable between a retracted position and a pulled out position, the display screen of said flat type display device being parallel to said front surface of said container when in said retracted position, said flat type display device being movably mounted in said container by a moving mechanism comprising
a first member (53) pivotally mounted on a frame of said container at a first pivot point (55), and
a second member (54) pivotally mounted on said first member at second pivot point (62) which is spaced from said first pivot point, and supporting said flat type display device (2);
characterised in that
said pulled out position comprises a pivoted out position and said moving mechanism comprises a frictional mechanism (57, 58, 59, 60) mounted on said first and second members so that said display device can be positioned at any selected angled position with respect to said front surface.

2. Apparatus as claimed in claim 1 characterised in that said first member is biased (56) to pivot in a direction to move said second pivot point away from said frame.

3. Apparatus as claimed in claim 1 or claim 2 characterised in that said frictional mechanism includes a cam surface (60) provided on said second member at a position around said second pivot point, a shoe (58) and a spring (59) having one end fixed on said first member and the other end engaged on said shoe to frictionally press said shoe (58) against said cam surface (60).

4. Apparatus as claimed in any of claims 1, 2 or 3 characterised in that said moving mechanism comprises a first latch mechanism (63, 64) and a second latch mechanism (65, 66) for latching said display device in said retracted position.

5. Apparatus as claimed in any one of claims 2 to 4 characterised in that said container contains a floppy disk drive unit (3) pivotally mounted adjacent to said flat type display device (2) and movable between a retracted position and a pivoted out position, the front surface of said floppy disk drive unit being parallel to said top surface (23) of said container when in said retracted position.

## Patentansprüche

1. Tragbares Elektronikgerät, enthaltend:
einen Behälter (1) mit einer Vorderseite (25), einer Rückseite (26), einer oberen Seite (23) und einer unteren Seite (24), wobei die Fläche der unteren Seite (24) kleiner ist als die Fläche der Vorderseite (25), und die Vorderseite (25) einen schwenkbar montierten Deckel umfaßt, wobei an der Innenseite dieses schwenkbar montierten Deckels eine Tastatur (4) montiert ist; und
eine Anzeigevorrichtung (2) vom Flachbildschirmtyp in dem Behälter (1) enthalten ist und zwischen einer eingeschobenen Position und einer ausgefahrenen Position bewegbar ist, wobei der Anzeigebildschirm dieser Anzeigevorrichtung vom Flachbildschirmtyp parallel zur Vorderseite des Behälters steht wenn er in eingeschobener Position ist, wobei diese Anzeigevorrichtung vom Flachbildschirmtyp beweglich in dem Behälter montiert ist durch einen bewegbaren Mechanismus, der umfaßt
ein erstes Glied (53), das an einem ersten Schwenkpunkt (55) an einem Rahmen dieses Behälters angelenkt ist, und
ein zweites Glied (54), das an einem vom ersten Schwenkpunkt beabstandeten zweiten Schwenkpunkt (62) angelenkt ist und die Anzeigevorrichtung (2) vom Flachbildschirmtyp trägt;
dadurch gekennzeichnet, daß
diese ausgefahrenen Position eine ausgeklappte Position beinhaltet und der Bewegungsmechanismus einen Reibmechanismus (57, 58, 59, 60) beinhaltet, der an dem ersten und dem zweiten Glied montiert ist, so daß die Anzeigevorrichtung in jeder gewählten Winkelposition gegenüber der Vorderseite positioniert werden kann.

2. Gerät gemäß Anspruch 1, dadurch gekennzeichnet, daß dieses erste Glied so vorgespannt ist (56), daß es in einer Richtung kippt, die den zweiten Schwenkpunkt vom Rahmen wegbewegt.

3. Gerät gemäß Anspruch 1 oder 2, dadurch gekennzeichnet, daß der Reibungsmechanismus eine Nockenfläche (60), die am zweiten Glied in einer Position um den zweiten Schwenkpunkt herum ausgebildet ist, einen Schuh (58) und eine Feder (59) beinhaltet, deren ein Ende am ersten Glied befestigt ist und deren anderes Ende in den Schuh eingreift, um diesen Schuh (58) mit Reibung gegen die Nockenfläche (60) zu drücken.

4. Gerät gemäß Anspruch 1, 2 oder 3, dadurch gekennzeichnet, daß der Bewegungsmechanismus einen ersten Klinkenmechanismus (63, 64) und einen zweiten Klinkenmechanismus (65, 66) beinhaltet, um die Anzeigevorrichtung in der zurückgeschobenen Stellung einzuklinken.

5. Gerät gemäß einem der Ansprüche 2 bis 4, dadurch gekennzeichnet, daß der Behälter eine Floppydisk-Laufwerkseinheit (3) enthält, die an der Flachbildschirm-Anzeigevorrichtung (2) angelenkt ist, und zwischen einer zurückgeschobenen Stellung und einer ausgeklappten Stellung bewegbar ist, wobei die Vorderfläche der Floppydisk-Laufwerkseinheit parallel zur oberen Fläche (23) des Behälters ausgerichtet ist, wenn sie in der zurückgeschobenen Stellung steht.

## Revendications

1. Appareil électronique portable comprenant :
un coffret (1) comprenant une surface avant (25), une surface arrière (26), une surface supérieure (23) et une surface inférieure (24), l'aire de ladite surface inférieure (24) étant inférieure à l'aire de ladite surface avant (25), et ladite surface avant (25) comprenant un couvercle pivotant, un clavier (4) étant monté à l'intérieur du dit couvercle pivotant; et
un visuel de type plat (2) logé dans ledit coffret (1) et mobile entre une position rétractée et une position sortie, l'écran d'affichage du dit visuel de type plat étant parallèle à ladite surface avant du dit coffret lorsqu'il est en position rétractée, ledit visuel de type plat étant monté de manière mobile dans ledit coffret par un dispositif de translation comprenant
un premier élément (53) pivotant monté sur un support du dit coffret sur une première pointe de pivot (55), et
un deuxième élément (54) pivotant monté sur ledit premier élément sur une deuxième pointe de pivot (62) qui est espacée de ladite première pointe de pivot, et soutenant ledit visuel de type plat (2);
caractérisé en ce que :
ladite position sortie consiste en une position pivotée et ledit dispositif de translation comprend un mécanisme de frottement (57, 58, 59, 60) monté sur les dits premier et deuxième éléments, de façon à pouvoir positionner ledit visuel sur n'importe quelle position inclinée par rapport à ladite surface avant.

2. Appareil selon la revendication 1, caractérisé en ce que ledit premier élément est incliné obliquement (56) pour pivoter dans une direction afin d'écarter ladite deuxième pointe de pivot du dit support.

3. Appareil selon la revendication 1 ou 2, caractérisé en ce que ledit mécanisme de frottement comprend une surface de came (60) prévue sur ledit deuxième élément sur une position autour de la deuxième pointe de pivot, un patin(58) et un ressort (59) dont une extrémité est fixée au dit premier élément et l'autre extrémité est engagée sur ledit patin pour presser par frottement ledit patin (58) contre ladite surface de came (60).

4. Appareil selon l'une quelconque des revendications 1, 2 et 3, caractérisé en ce que ledit dispositif de translation comprend un premier mécanisme d'encliquetage (63, 64) et un deuxième mécanisme d'encliquetage (65, 66) pour verrouiller ledit visuel dans ladite position rétractée.

5. Appareil selon l'une quelconque des revendications 2 à 4, caractérisé en ce que ledit coffret contient une unité de disquette (3) pivotante montée à côté du dit visuel de type plat (2) et mobile entre une position rétractée et une position pivotée, la surface avant de ladite unité de disquette étant parallèle à ladite surface supérieure (23) du dit logement lorsqu'elle est en position rétractée.
